# EUROPEAN PATENT APPLICATION

(11) **EP 4 568 397 A1**
(43) Date of publication of application: **11.06.2025**
(21) Application number: 22953460.7
(22) Date of filing: 01.08.2022
(51) Int. Cl.: H04W 72/23, H04L 5/00, H04B 7/0456, H04B 7/06

(54) **INFORMATION INDICATION METHOD AND APPARATUS, MEDIUM, AND PRODUCT**

(71) Applicant: Beijing Xiaomi Mobile Software Co., Ltd., Beijing 100085 (CN)
(72) Inventor: GAO, Xueyuan, Beijing 100085 (CN)
(74) Representative: Stöckeler, Ferdinand
(86) International application number: PCT/CN2022/109538
(87) International publication number: WO 2024/026645

(57) **Abstract**

The present disclosure relates to the field of communications. Disclosed are an information indication method and apparatus, a medium, and a product. The method comprises: receiving DCI carrying a first indication field, wherein some of code points in the first indication field are used for indicating an SRS resource set and an SRI/TPMI field associated under STxMP configuration scheduled on the basis of a single DCI, and when a terminal is scheduled to perform uplink transmission to a single TRP via a single antenna panel on an uplink data channel. The method is used for supporting an indication of dynamic switching between s-TRP and m-TRP during simultaneous uplink transmission based on a multi-antenna antenna panel terminal; according to new STxMP transmission characteristics, a design is made to enhance a dynamic indication field introduced into R17, so that the indication and dynamic switching of a transmission scheme can be better and flexibly supported.

## Description

### TECHNICAL FIELD

The present invention relates to the field of communications, and in particular relates to a method and apparatus for indicating information, a medium and a product.

### BACKGROUND

In order to ensure the reliability and throughput rate of transmission, implementation of simultaneous transmission via multiple panels (STxMP) through multiple antenna panels on a terminal towards directions of multiple transmission and reception points (TRPs) of a base stations is provided in the related art.

The sounding reference signal (SRS) resource set indication field may implement dynamic switching of scheduling of a physical uplink shared channel (PUSCH) between single transmission and reception point (s-TRP) and multi-transmission and reception point (m-TRP). However, due to the configuration limitation of the SRS resource set in Release-17 (R17), the design of the indication field is also relatively limited, and how to improve the indication field is an urgent problem to be solved.

### SUMMARY

Embodiments of the present invention provide a method and apparatus for indicating information, a medium and a product. The technical solutions are as follows.

According to an aspect of embodiments of the present invention, there is provided a method for indicating information, which is performed by a terminal, and includes:
receiving downlink control information (DCI) carrying a first indication field, where a part of code points in the first indication field indicates a sounding reference signal (SRS) resource set and an SRS resource indication/transmitted precoding matrix indicator (SRI/TPMI) field associated with a simultaneous transmission via multiple panels (STxMP) configuration scheduled by a single DCI and associated in a case where uplink data channel scheduling of the terminal is uplink transmission from a single antenna panel to a single transmission and reception point (TRP). An antenna panel is also called a panel.

According to an aspect of embodiments of the present invention, there is provided a method for indicating information, which is performed by a network device, and includes:
sending DCI carrying a first indication field, where a part of code points in the first indication field indicates an SRS resource set and an SRI/TPMI field associated with an STxMP configuration scheduled by a single DCI and associated in a case where uplink data channel scheduling of the terminal is uplink transmission from a single antenna panel to a single TRP.

According to another aspect of embodiments of the present invention, there is provided an apparatus for indicating information, which includes:
a receiving module configured to receive DCI carrying a first indication field, where a part of code points in the first indication field indicates an SRS resource set and an SRI/TPMI field associated in a case where uplink data channel scheduling of the terminal is uplink transmission from a single antenna panel to a single TRP under an STxMP configuration scheduled by a single DCI.

According to another aspect of embodiments of the present invention, there is provided an apparatus for indicating information, which includes:
a sending module configured to send DCI carrying a first indication field, where a part of code points in the first indication field indicates an SRS resource set and an SRI/TPMI field associated with an STxMP configuration scheduled by a single DCI and associated in a case where uplink data channel scheduling of the terminal is uplink transmission from a single antenna panel to a single TRP.

According to another aspect of embodiments of the present invention, there is provided a terminal, which includes:
a processor; and
a transceiver coupled to the processor;
the processor is configured to load and execute executable instructions to implement the method for indicating information as described in various aspects above.

According to another aspect of embodiments of the present invention, there is provided a network device, which includes:
a processor; and
a transceiver coupled to the processor;
the processor is configured to load and execute executable instructions to implement the method for indicating information as described in various aspects above.

According to another aspect of embodiments of the present invention, there is provided a chip, including a programmable logic circuit and/or program instructions, and configured to implement the method for indicating information as described in various aspects above when it runs.

According to another aspect of embodiments of the present invention, there is provided a computer-readable storage medium having stored therein at least one instruction, at least one program, a code set, or an instruction set, which is configured to be loaded and executed by a processor to implement the method for indicating information as described in various aspects above.

According to another aspect of embodiments of the present invention, there is provided a computer program product (or a computer program) including computer instructions stored in a computer-readable storage medium, and the computer instructions, when read by a processor of a computer device from the computer-readable storage medium and executed by the processor, cause the computer device to perform the method for indicating information as described in various aspects above.

The technical solutions according to embodiments of the present invention may include the following advantageous effects.

In order to support indication of dynamic switching between an s-TRP and an m-TRP during uplink simultaneous transmission of the terminal via multiple panels, according to a new STxMP transmission feature, an enhanced design is made to a DCI indication field in the related art, thereby better and more flexibly supporting indication and dynamic switching of the STxMP transmission solution.

It is to be understood that both the foregoing general description and the following detailed description are illustrative and explanatory and are not restrictive of the present invention.

### BRIEF DESCRIPTION OF THE DRAWINGS

In order to clearly illustrate technical solutions in embodiments of the present invention, a brief introduction of drawings to be used in descriptions of embodiments of the present invention is given below. Obviously, the drawings in the following descriptions only show some embodiments of the present invention, and for those skilled in the art, other drawings may be obtained according to these drawings without creative labor.
FIG. 1 is a schematic diagram illustrating a communication system according to an example embodiment of the present invention;
FIG. 2 is a schematic diagram illustrating a communication system according to an example embodiment of the present invention;
FIG. 3 is a schematic diagram illustrating an uplink transmission process according to an example embodiment of the present invention;
FIG. 4 is a schematic diagram illustrating an uplink transmission process according to an example embodiment of the present invention;
FIG. 5 is a schematic diagram illustrating a DCI information field according to an example embodiment of the present invention;
FIG. 6 is a flow chart illustrating a method for indicating information according to an example embodiment of the present invention;
FIG. 7 is a flow chart illustrating a method for indicating information according to an example embodiment of the present invention;
FIG. 8 is a block diagram illustrating an apparatus for indicating information according to an example embodiment of the present invention;
FIG. 9 is a block diagram illustrating an apparatus for indicating information according to an example embodiment of the present invention;
FIG. 10 is a schematic diagram illustrating a terminal according to an example embodiment of the present invention; and
FIG. 11 is a schematic diagram illustrating a network device according to an example embodiment of the present invention.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the present invention. Instead, they are merely examples of apparatuses and methods consistent with some aspects related to the present invention as recited in the appended claims. In the description of the present invention, unless otherwise stated, "/" means "or", for example, A/B may mean A or B. The term "and/or" used herein describes an associated relationship of associated objects, and means that there may be three relationships, for example, the expression "A and/or B" may represent the following three cases: A exists alone, A and B exist at the same time, and B exists alone.

Terms used in the present invention are only for the purpose of describing specific embodiments, but should not be construed to limit the present invention. As used in the present invention and the appended claims, "a/an", "said" and "the" in singular forms are intended to include plural forms, unless clearly indicated in the context otherwise. It should also be understood that, the term "and/or" used herein represents and contains any or all possible combinations of one or more associated listed items.

It should be understood that, although terms such as "first," "second" and "third" may be used in the present invention for describing various information, these information should not be limited by these terms. These terms are only used for distinguishing information of the same type from each other. For example, first information may also be referred to as second information, and similarly, the second information may also be referred to as the first information, without departing from the scope of embodiments of the present invention. As used herein, the term "if" may be construed to mean "when" or "upon" or "in response to determining" depending on the context.

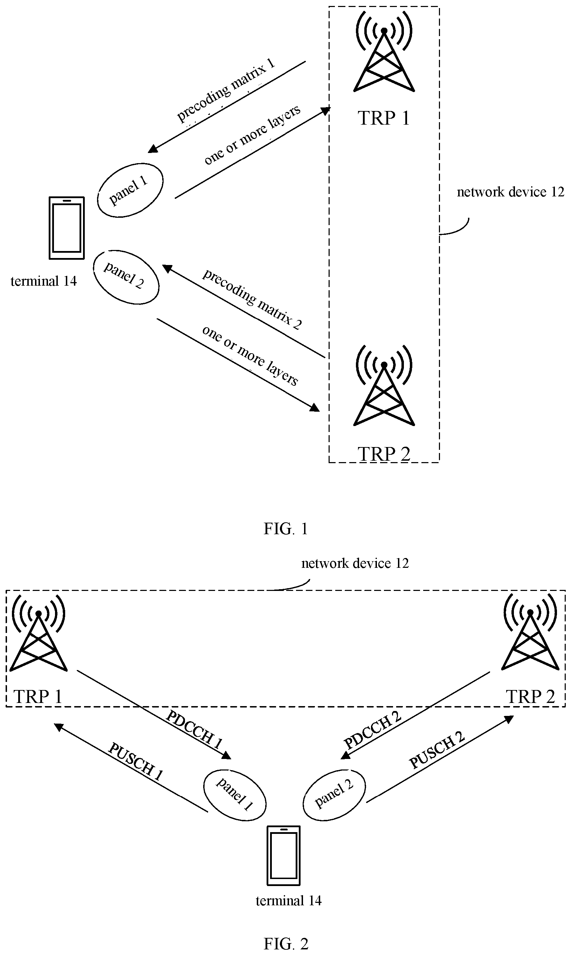

FIG. 1 is a schematic diagram illustrating a communication system according to an example embodiment of the present invention. The communication system may include: a network device 12 and a terminal 14, and the network device 12 includes a TRP1 and a TRP 2.

The network device 12 may be a base station, which is a device that provides wireless communication functions for the terminal 14. The base station may include various forms of macro base stations, micro base stations, relay stations, access points, and the like. In systems using different radio access technologies, the name of a device with the function of a base station may be different. For example, in a long term evolution (LTE) system, it is called an evolved base station (eNodeB, eNB); and in a 5G new radio (NR) system, it is called a next generation base station (gNodeB, gNB). As communication technologies evolve, the expression of the "base station" may change. For ease of description in embodiments of the present invention, the above devices providing wireless communication functions for the terminal 14 are collectively referred to as the network device 12.

The terminal 14 may include various devices with wireless communication functions, such as hand-held devices, in-vehicle devices, wearable devices, computing devices or other processing devices connected to a wireless modem, as well as various forms of user equipment, mobile stations (MSs), terminal devices, and the like. For convenience of description, the above devices are collectively referred to as terminals.

For example, there are two communication scenarios between the network device 12 and the terminal 14: an uplink communication scenario and a downlink communication scenario. The uplink communication means that the terminal 14 sends a signal to the network device 12, and the downlink communication means that the network device 12 sends a signal to the terminal 14.

Regarding uplink PUSCH transmission to directions of multiple TRPs of a base station, Release-17 (R17) of the third generation partnership project (3GPP) mainly standardizes cooperative transmission related to the time division multiplexing (TDM) transmission mode, and same information on the PUSCH is repeatedly sent to different TRPs of the base station in a time division manner through different transmission occasions (TOs) in the time domain. This method has a relatively low requirement on the capability of the terminal, does not require the support of a capability for sending beams simultaneously, and has a large transmission delay.

Regarding the uplink, for PUSCH channels of different TRPs, the actually passed channels may have very different spatial features. Therefore, it is considered that spatial reception parameters of PUSCH channels in different sending directions are different.

In an enhancement target of R18, it is mainly desirable to achieve simultaneous cooperative transmission through multiple panels of the terminal towards multiple TRP directions to increase the transmission reliability and throughput rate, and may effectively reduce the transmission delay with multiple TRPs, but the terminal is required to have the capability of sending multiple beams simultaneously. Transmission of the PUSCH may be based on transmission from multiple antenna panels to multiple TRPs, scheduled by a single physical downlink control channel (PDCCH), i.e. a single downlink control information (S-DCI).

As shown in FIG. 1, a precoding matrix 1 and a precoding matrix 2 are directly or indirectly scheduled to the terminal by a single DCI. The terminal 14 sends uplink data of one or more layers to a TRP 1 using an antenna panel 1 based on the precoding matrix 1. The terminal 14 sends uplink data of one or more layers to a TRP 1 using an antenna panel 2 based on the precoding matrix 2.

Transmission of the PUSCH may be based on different PDCCHs, i.e., transmission from multiple antenna panels to multiple TRPs scheduled by multi-downlink control information (M-DCI), as shown in FIG. 2.

The TRP 1 sends first DCI to the terminal 14 via a PDCCH 1, to schedule the terminal 14 to use an antenna panel 1 to send a PUSCH 1 to the TRP 1. The TRP 2 sends second DCI to the terminal 14 via a PDCCH 2 to schedule the terminal 14 to use an antenna panel 2 to send a PUSCH 2 to the TRP 2.

The above TRP 1 and TRP 2 are two TRPs of the same cell.

In an STxMP scenario, an uplink transmission process includes: codebook-based uplink transmission and non-codebook-based uplink transmission.

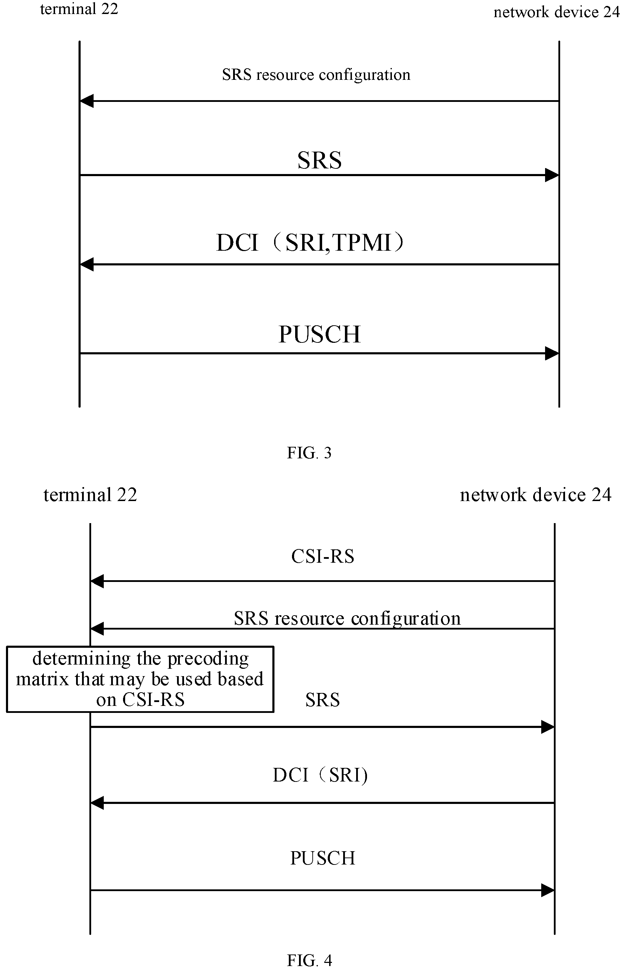

FIG. 3 is a schematic diagram illustrating codebook-based uplink PUSCH transmission according to an example embodiment of the present invention, and in this schematic diagram, a terminal 22 and a network device 24 are included.

In a codebook-based uplink transmission process, the network device 24 firstly sends an SRS resource configuration to the terminal 22, and the SRS resource configuration includes at least one SRS resource set and a relevant configuration of each SRS resource, then the terminal 22 sends at least one SRS to the network device 24 based on the SRS resource configuration. The network device 24 obtains a channel condition of each uplink channel based on the received at least one SRS, and then provides DCI to the terminal 22, where the DCI at least includes an SRI and a TPMI, and finally the terminal 22 sends a PUSCH to the network device 24 based on the TPMI and the SRI.

FIG. 4 is a schematic diagram illustrating non-codebook-based uplink transmission according to an example embodiment of the present invention, and in this schematic diagram, a terminal 22 and a network device 24 are included.

In a non-codebook-based uplink transmission process, a precoding matrix is no longer limited in a fixed candidate set. The network device 24 firstly sends a channel state information-reference symbol (CSI-RS) and SRS resource configuration information to the terminal 22, and the SRS resource configuration includes at least one SRS resource set and a relevant configuration of each SRS resource, and then the terminal 22 performs calculation by itself based on a measurement result of the CSI-RS through an algorithm like a singular value decomposition algorithm to obtain at least one precoding matrix which may be used, and then the terminal 22 sends at least one SRS to the network device 24 based on the SRS resource configuration. The network device 24 obtains a channel condition of each uplink channel based on the received at least one SRS, and further provides DCI to the terminal 22, and the DCI at least includes an SRI. Finally, the terminal 22 determines, according to the SRI, a precoding matrix to be used this time from precoding matrixes possibly used, and sends a PUSCH to the network device 24 according to the SRI and the precoding matrix used this time.

As can be seen from the above FIG. 3 and FIG. 4, the network device needs to send the SRS resource configuration to the terminal in advance. In the STxMP scenario, there may be the following two configuration modes.

A first possible SRS resource configuration mode is as follows: the network device configures configurations of two SRS resource sets to the terminal, the two SRS resource sets include a first SRS resource set and a second SRS resource set, and different SRS resource sets are associated with different antenna panel information.

The two SRS resource sets may be used for codebook-based transmission or non-codebook-based transmission.

Optionally, the different antenna panel information includes at least one of the following information:
- different antenna panels, where the number of antenna panels may be 2 or 4, and the maximum number is 2 by default in embodiments of the present invention;
- different TRPs;
- different TCI states; or
- different TOs.

In some embodiments, the first SRS resource set is associated with a first antenna panel of the terminal; and the second SRS resource set is associated with a second antenna panel of the terminal.

In some embodiments, the first SRS resource set is associated with a first TRP of the network device, and the first TRP sends DCI to the first antenna panel; and the second SRS resource set is associated with a second TRP of the network device, and the second TRP sends DCI to the second antenna panel.

In some embodiments, the first SRS resource set is associated with a first TCI state of the terminal, and the first TCI state indicates a beam sent to the first TRP; and the second SRS resource set is associated with a second TCI state of the terminal, and the second TCI state indicates a beam sent to the second TRP.

In some embodiments, the first SRS resource set is associated with a first TO of the terminal, and the first TO is configured for sending an SRS to the first TRP; and the second SRS resource set is associated with a second TO of the terminal, and the second TO is configured for sending an SRS to the second TRP.

A second possible SRS resource configuration mode is as follows: the network device configures a configuration of one SRS resource set to the terminal. The SRS resource set includes a first SRS resource subset and a second SRS resource subset, and different SRS resource subsets are associated with different antenna panel information.

The SRS resource set may be used for codebook-based transmission or non-codebook-based transmission.

Optionally, the different antenna panel information includes at least one of the following information:
- different antenna panels, where the number of antenna panels may be 2 or 4, and the maximum number is 2 by default in embodiments of the present invention;
- different TRPs;
- different TCI states; or
- different TOs.

In some embodiments, the first SRS resource subset is associated with a first antenna panel of the terminal; and the second SRS resource subset is associated with a second antenna panel of the terminal.

In some embodiments, the first SRS resource subset is associated with a first TRP of the network device, and the first TRP sends DCI to the first antenna panel; and the second SRS resource subset is associated with a second TRP of the network device, and the second TRP sends DCI to the second antenna panel.

In some embodiments, the first SRS resource subset is associated with a first TCI state of the terminal, and the first TCI state indicates a beam sent to the first TRP; and the second SRS resource subset is associated with a second TCI state of the terminal, and the second TCI state indicates a beam sent to the second TRP.

In some embodiments, the first SRS resource subset is associated with a first TO of the terminal, and the first TO is configured for sending an SRS to the first TRP; and the second SRS resource subset is associated with a second TO of the terminal, and the second TO is configured for sending an SRS to the second TRP.

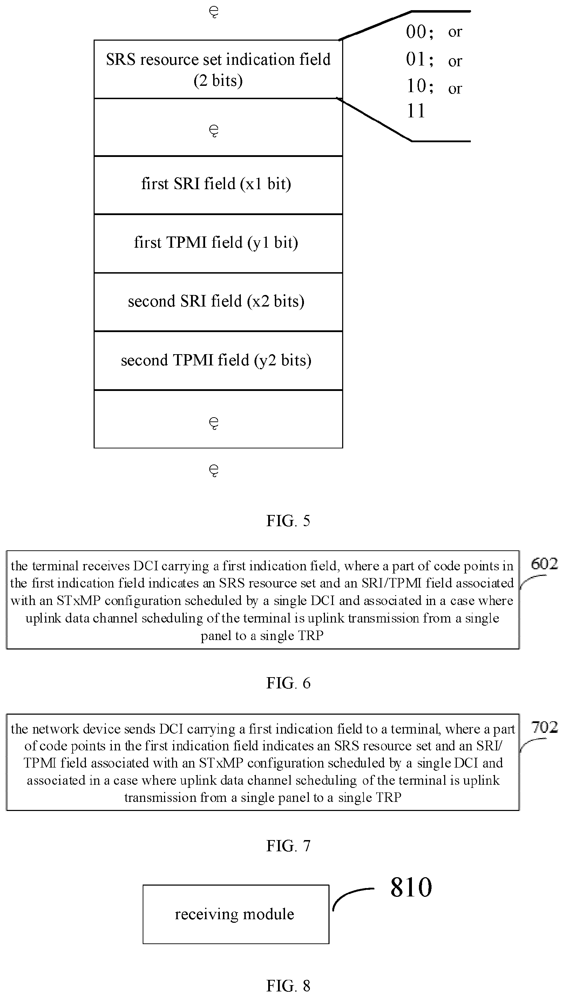

Regarding the above two SRS resource configuration modes, an SRS resource set indication field in the DCI also needs to be redesigned, such that in the STxMP scenario, the network device is able to indicate to the terminal the SRS resource set and an SRI/TPMI field that need to be associated in a single-TRP (s-TRP) scenario or a multi-TRP (m-TRP) scenario. FIG. 5 is a schematic diagram illustrating a DCI information field provided according to an example embodiment of the present invention. Referring to FIG. 5, DCI includes a plurality of information fields, and fields related to the present invention in the plurality of information fields include: an SRS resource set indication field (2 bits), a first SRI field (x1 bit), a second SRI field (x2 bits), a first TPMI field (y1 bit), and a second TPMI field (y2 bits). In a case of the non-codebook, the SRS resource set indication field and two SRI fields are used. In a case of the codebook, the SRS resource set indication field, two SRI fields and two TPMI fields are used. Herein, x1, x2, y1, and y2 are variable values.

In the current R17 protocol, regarding cooperative transmission (non-simultaneous transmission) in the TDM transmission mode, the meanings of various code points in the SRS resource set indication field are designed as shown in Table 1 below:

**Table 1**

| Code point | SRS resource set | SRI (for non-codebook and codebook)/TPMI (codebook only) field |
|---|---|---|
| 00 | s-TRP mode and associated with a first SRS resource set (TRP 1) | a first SRI/TPMI field (a second SRI/TPMI field is not used) |
| 01 | s-TRP mode and associated with a second SRS resource set (TRP 2) | a first SRI/TPMI field (a second SRI/TPMI field is not used) |
| 10 | m-TRP mode and associated with (a first SRS resource set, a second SRS resource set) | using both a first SRI/TPMI field and a second SRI/TPMI field |
| 11 | m-TRP mode and associated with (a second SRS resource set, a first SRS resource set) | using both a first SRI/TPMI field and a second SRI/TPMI field |

The meanings of various code points in Table 1 are as follows:
In a case where the code point of the SRS resource set indication field is 00, it is used to instruct a terminal to use the s-TRP mode to transmit a PUSCH to the TRP 1, where the first SRS resource set is associated. In the codebook-based transmission mode, the first SRI/TPMI field in the DCI is used to obtain an SRI and a TPMI to be used in this transmission. In the non-codebook-based transmission mode, the first SRI/TPMI field in the DCI is used to obtain an SRI to be used in this transmission. In this case, the second SRI/TPMI field is not used.

In a case where the code point of the SRS resource set indication field is 01, it is used to instruct a terminal to use the s-TRP mode to transmit a PUSCH to the TRP 2, where the second SRS resource set is associated. In the codebook-based transmission mode, the first SRI/TPMI field in the DCI is used to obtain an SRI and a TPMI to be used in this transmission. In the non-codebook-based transmission mode, the first SRI/TPMI field in the DCI is used to obtain an SRI to be used in this transmission. In this case, the second SRI/TPMI field is not used.

In a case where the code point of the SRS resource set indication field is 10, it is used to instruct a terminal to use the m-TRP mode to first transmit a PUSCH to the TRP 1 at a first TO, where the first SRS resource set is associated; and then transmit a PUSCH to the TRP 2 at a second TO, where the second SRS resource set is associated. In the codebook-based transmission mode, the first SRI/TPMI field in the DCI is used to obtain an SRI and a TPMI to be used in the transmission to the TRP 1, and the second SRI/TPMI field in the DCI is used to obtain an SRI and a TPMI to be used in the transmission to the TRP 2. In the non-codebook based transmission mode, the first SRI/TPMI field in the DCI is used to obtain an SRI to be used in the transmission to the TRP 1, and the second SRI/TPMI field in the DCI is used to obtain an SRI to be used in the transmission to the TRP 2.

In a case where the code point of the SRS resource set indication field is 11, it is used to instruct a terminal to use the m-TRP mode to first transmit a PUSCH to the TRP 2 at a first TO, where the second SRS resource set is associated; and then transmit a PUSCH to the TRP 1 at a second TO, where the first SRS resource set is associated. In the codebook-based transmission mode, the second SRI/TPMI field in the DCI is used to obtain an SRI and a TPMI to be used in the transmission to the TRP 2, and the first SRI/TPMI field in the DCI is used to obtain an SRI and a TPMI to be used in the transmission to the TRP 1. In the non-codebook based transmission mode, the second SRI/TPMI field in the DCI is used to obtain an SRI to be used in the transmission to the TRP 2, and the first SRI/TPMI field in the DCI is used to obtain an SRI to be used in the transmission to the TRP 1.

As can be seen from the analysis of Table 1, in the s-TRP mode, no matter whether the first SRS resource set or the second SRS resource set is associated, the first SRI/TPMI field is used. Considering that different antenna panels may have different capabilities, for example, the number of ports corresponding to maximum SRS resources supported may be different, and the maximum number of data layers supported may also be different, at least for the non-codebook case, the number of SRS resources corresponding to different SRS resource sets actually configurable may be different depending on the capabilities of antenna panels. Since the x bits and y bits actually required may not be the same, if y is greater than x, the x bits are not enough to be used in the case where the above code point is 01. Based on this, the first SRI/TPMI field and the second SRI/TPMI field can only be designed to have the same number of bits, and the same number of bits is a larger value of the x bits and the y bits. In this case, a larger number of bits are taken up, resulting in that the DCI consumes more resources.

For this reason, the present invention proposes a different design idea to solve the above problems.

FIG. 6 is a flow chart illustrating a method for indicating information according to an example embodiment of the present invention. The method is performed by a terminal in the communication system shown in FIG. 1, and includes the follows.

**In step 602,** the terminal receives DCI carrying a first indication field, and a part of code points in the first indication field indicates an SRS resource set and an SRI/TPMI field associated with an STxMP configuration scheduled by a single DCI and associated in a case where uplink data channel scheduling of the terminal is uplink transmission from a single antenna panel to a single TRP.

Optionally, the first indication field is an SRS resource set indication field.

A possible design mode 1 is as follows:
In the design mode 1, the design idea of Table 1 continues to be used, i.e., a first SRI/TPMI field is always used regardless of which SRS resource set is associated with the s-TRP mode.

For example, a value of the first indication field includes: a first code point. For example, the first code point is 00 or 01.

In the case where the value of the first indication field is the first code point, the first code point indicates to the terminal that the SRS resource set associated in the case where the uplink data channel scheduling is the uplink transmission from the single antenna panel to the single TRP is an x^{th} SRS resource set, and an SRI/TPMI field used is the first SRI/TPMI field. It may be understood that in a case of uplink transmission corresponding to a codebook, the SRI/TPMI field used is the first SRI/TPMI field; and in a case of uplink transmission corresponding to a non-codebook, the SRI field used is the first SRI field. For example, in a case where the first code point is 00, x is 1; and in a case where the first code point is 01, x is 2.

The first SRI/TPMI field fixedly associates an SRS resource set including the largest number of SRS resources in all SRS resource sets as a first SRS resource set, and the number of bits corresponding to the first SRI field is greater than or equal to the number of bits of the second SRI field.

For example, a part of code points in the SRS resource set indication field based on this design idea is as shown in Table 2 below:

**Table 2**

| Code point | SRS resource set | SRI (for non-codebook and codebook)/TPMI (codebook only) field |
|---|---|---|
| 00 | s-TRP mode and associated with a first SRS resource set | a first SRI/TPMI field (a second SRI/TPMI field is not used) |
| 01 | s-TRP mode and associated with a second SRS resource set | a first SRI/TPMI field (a second SRI/TPMI field is not used) |

Here, the first SRS resource set is by default the SRS resource set with the largest number of SRS resources among all SRS resource sets (it may be associated with a TRP 1 or a TRP 2, which is not limited), and the number of bits corresponding to the first SRI field is greater than or equal to the number of bits of the second SRI field.

A possible design mode 2 is as follows:
In the design mode 2, the design idea of Table 1 is not used anymore, and which SRI/TPMI field to use depends on which SRS resource set the s-TRP mode is associated with.

For example, the value of the first indication field includes: a second code point. For example, the second code point is 01.

In the case where the value of the first indication field is the second code point, the second code point indicates to the terminal that the SRS resource set to be used in the case where the uplink data channel scheduling is the uplink transmission from the single antenna panel to the single TRP is the second SRS resource set, and the SRI/TPMI field used is the second SRI/TPMI field. It may be understood that in a case of uplink transmission corresponding to a codebook, the SRI/TPMI field used is the second SRI/TPMI field; and in a case of uplink transmission corresponding to a non-codebook, the SRI field used is the second SRI field.

For example, a part of code points in the SRS resource set indication field based on this design idea is as shown in Table 3 below:

**Table 3**

| Code point | SRS resource set | SRI (for non-codebook and codebook) /TPMI (codebook only) field |
|---|---|---|
| 00 | s-TRP mode and associated with a first SRS resource set | a first SRI/TPMI field (a second SRI/TPMI field is not used) |
| 01 | s-TRP mode and associated with a second SRS resource set | a second SRI/TPMI field (a first SRI/TPMI field is not used) |

Of course, the above examples are illustrated with reference to the case where the network device configures two SRS resources sets to the terminal. In a case where the network device configures one SRS resource set to the terminal, the one SRS resource set includes a first SRS resource subset and a second SRS resource subset.

A possible design mode 3 is as follows:
In the design mode 3, the design idea of Table 1 continues to be used, i.e., the first SRI/TPMI field is always used regardless of which SRS resource subset the s-TRP mode is associated with.

For example, the value of the first indication field includes: the first code point. For example, the first code point is 00 or 01.

In the case where the value of the first indication field is the first code point, the first code point indicates to the terminal that the SRS resource subset associated in the case where the uplink data channel scheduling is the uplink transmission from the single antenna panel to the single TRP is an x^{th} SRS resource subset, and the SRI/TPMI field used is the first SRI/TPMI field. It may be understood that in a case of uplink transmission corresponding to the codebook, the SRI/TPMI field used is the first SRI/TPMI field; and in a case of uplink transmission corresponding to the non-codebook, the SRI field used is the first SRI field. For example, in a case where the first code point is 00, x is 1; and in a case where the first code point is 01, x is 2.

The first SRI/TPMI field fixedly associates an SRS resource subset including the largest number of SRS resources in all SRS resource subsets as the first SRS resource subset, and the number of bits corresponding to the first SRI field is greater than or equal to the number of bits of the second SRI field.

For example, a part of code points in the SRS resource subset indication field based on this design idea is as shown in Table 4 below:

**Table 4**

| Code point | SRS resource subset | SRI (for non-codebook and codebook)/TPMI (codebook only) field |
|---|---|---|
| 00 | s-TRP mode and associated with a first SRS resource subset | a first SRI/TPMI field (a second SRI/TPMI field is not used) |
| 01 | s-TRP mode and associated with a second SRS resource subset | a first SRI/TPMI field (a second SRI/TPMI field is not used) |

Here, the first SRS resource subset is by default the SRS resource subset with the largest number of SRS resources among all SRS resource subsets (it may be associated with the TRP 1 or the TRP 2, which is not limited), and the number of bits corresponding to the first SRI field is greater than or equal to the number of bits of the second SRI field.

A possible design mode 4 is as follows:
In the design mode 4, the design idea of Table 1 is not used anymore, and which SRI/TPMI field to use depends on which SRS resource subset the s-TRP mode is associated with.

For example, the value of the first indication field includes: the second code point. For example, the second code point is 01.

In the case where the value of the first indication field is the second code point, the second code point indicates to the terminal that the SRS resource subset to be used in the case where the uplink data channel scheduling is the uplink transmission from the single antenna panel to the single TRP is the second SRS resource subset, and the SRI/TPMI field used is the second SRI/TPMI field. It may be understood that in a case of uplink transmission corresponding to the codebook, the SRI/TPMI field used is the second SRI/TPMI field; and in a case of uplink transmission corresponding to the non-codebook, the SRI field used is the second SRI field.

For example, a part of code points in the SRS resource subset indication field based on this design idea is as shown in Table 5 below:

**Table 5**

| Code point | SRS resource subset | SRI (for non-codebook and codebook)/TPMI (codebook only) field |
|---|---|---|
| 00 | s-TRP mode and associated with a first SRS resource subset | a first SRI/TPMI field (a second SRI/TPMI field is not used) |
| 01 | s-TRP mode and associated with a second SRS resource subset | a second SRI/TPMI field (a first SRI/TPMI field is not used) |

Optionally, the uplink data channel is a PUSCH.

In summary, the method according to embodiments of the present invention may reduce the number of bits required to be occupied by the DCI by using any one of the above design modes for the SRS resource set indication field in a case where the terminal is scheduled to use the uplink transmission from the single antenna panel to the single TRP in the STxMP scenario.

FIG. 7 is a flow chart illustrating a method for indicating information according to an example embodiment of the present invention. The method is performed by a network device in the communication system shown in FIG. 1, and includes the follows.

**In step 702,** the network device sends DCI carrying a first indication field to the terminal, and a part of code points in the first indication field indicates an SRS resource set and an SRI/TPMI field associated with an STxMP configuration scheduled by a single DCI and associated in a case where uplink data channel scheduling of the terminal is uplink transmission from a single antenna panel to a single TRP.

Optionally, the first indication field is an SRS resource set indication field.

A possible design mode 1 is as follows:
In the design mode 1, the design idea of Table 1 continues to be used, i.e., a first SRI/TPMI field is always used regardless of which SRS resource set is associated with the s-TRP mode.

For example, a value of the first indication field includes: a first code point. For example, the first code point is 00 or 01.

In the case where the value of the first indication field is the first code point, the first code point indicates to the terminal that the SRS resource set associated in the case where the uplink data channel scheduling is the uplink transmission from the single antenna panel to the single TRP is an x^{th} SRS resource set, and an SRI/TPMI field used is the first SRI/TPMI field. It may be understood that in a case of uplink transmission corresponding to a codebook, the SRI/TPMI field used is the first SRI/TPMI field; and in a case of uplink transmission corresponding to a non-codebook, the SRI field used is the first SRI field. For example, in a case where the first code point is 00, x is 1; and in a case where the first code point is 01, x is 2.

The first SRI/TPMI field fixedly associates an SRS resource set including the largest number of SRS resources in all SRS resource sets as a first SRS resource set, and the number of bits corresponding to the first SRI field is greater than or equal to the number of bits of the second SRI field.

For example, a part of code points in the SRS resource set indication field based on this design idea is as shown in above Table 2. Here, the first SRS resource set is by default the SRS resource set with the largest number of SRS resources among all SRS resource sets (it may be associated with a TRP 1 or a TRP 2, which is not limited), and the number of bits corresponding to the first SRI field is greater than or equal to the number of bits of the second SRI field.

A possible design mode 2 is as follows:
In the design mode 2, the design idea of Table 1 is not used anymore, and which SRI/TPMI field to use depends on which SRS resource set the s-TRP mode is associated with.

For example, the value of the first indication field includes: a second code point. For example, the second code point is 01.

In the case where the value of the first indication field is the second code point, the second code point indicates to the terminal that the SRS resource set to be used in the case where the uplink data channel scheduling is the uplink transmission from the single antenna panel to the single TRP is the second SRS resource set, and the SRI/TPMI field used is the second SRI/TPMI field. It may be understood that in a case of uplink transmission corresponding to a codebook, the SRI/TPMI field used is the second SRI/TPMI field; and in a case of uplink transmission corresponding to a non-codebook, the SRI field used is the second SRI field.

For example, a part of code points in the SRS resource set indication field based on this design idea is as shown in above Table 3.

Of course, the above examples are illustrated with reference to the case where the network device configures two SRS resources sets to the terminal. In a case where the network device configures one SRS resource set to the terminal, the one SRS resource set includes a first SRS resource subset and a second SRS resource subset.

A possible design mode 3 is as follows:
In the design mode 3, the design idea of Table 1 continues to be used, i.e., the first SRI/TPMI field is always used regardless of which SRS resource subset the s-TRP mode is associated with.

For example, the value of the first indication field includes: the first code point. For example, the first code point is 00 or 01.

In the case where the value of the first indication field is the first code point, the first code point indicates to the terminal that the SRS resource subset associated in the case where the uplink data channel scheduling is the uplink transmission from the single antenna panel to the single TRP is an x^{th} SRS resource subset, and the SRI/TPMI field used is the first SRI/TPMI field. It may be understood that in a case of uplink transmission corresponding to the codebook, the SRI/TPMI field used is the first SRI/TPMI field; and in a case of uplink transmission corresponding to the non-codebook, the SRI field used is the first SRI field. For example, in a case where the first code point is 00, x is 1; and in a case where the first code point is 01, x is 2.

The first SRI/TPMI field fixedly associates an SRS resource subset including the largest number of SRS resources in all SRS resource subsets as the first SRS resource subset, and the number of bits corresponding to the first SRI field is greater than or equal to the number of bits of the second SRI field.

For example, a part of code points in the SRS resource subset indication field based on this design idea is as shown in above Table 4.

Here, the first SRS resource subset is by default the SRS resource subset with the largest number of SRS resources among all SRS resource subsets (it may be associated with the TRP 1 or the TRP 2, which is not limited), and the number of bits corresponding to the first SRI field is greater than or equal to the number of bits of the second SRI field.

A possible design mode 4 is as follows:
In the design mode 4, the design idea of Table 1 is not used anymore, and which SRI/TPMI field to use depends on which SRS resource subset the s-TRP mode is associated with.

For example, the value of the first indication field includes: the second code point. For example, the second code point is 01.

In the case where the value of the first indication field is the second code point, the second code point indicates to the terminal that the SRS resource subset to be used in the case where the uplink data channel scheduling is the uplink transmission from the single antenna panel to the single TRP is the second SRS resource subset, and the SRI/TPMI field used is the second SRI/TPMI field. It may be understood that in a case of uplink transmission corresponding to the codebook, the SRI/TPMI field used is the second SRI/TPMI field; and in a case of uplink transmission corresponding to the non-codebook, the SRI field used is the second SRI field.

For example, a part of code points in the SRS resource subset indication field based on this design idea is as shown in above Table 5.

Optionally, the uplink data channel is a PUSCH.

In summary, the method according to embodiments of the present invention may reduce the number of bits required to be occupied by the DCI by using any one of the above design modes for the SRS resource set indication field in a case where the terminal is scheduled to use the uplink transmission from the single antenna panel to the single TRP in the STxMP scenario.

FIG. 8 is a block diagram illustrating an apparatus for indicating information according to an example embodiment of the present invention. The apparatus includes:
a receiving module 810 configured to receive DCI carrying a first indication field, where a part of code points in the first indication field indicates an SRS resource set and an SRI/TPMI field associated in a case where uplink data channel scheduling of the terminal is uplink transmission from a single antenna panel to a single TRP under an STxMP configuration scheduled by a single DCI.

In a possible design of embodiments of the present invention, the first code point is 00 or 01.

In a possible design of embodiments of the present invention, the DCI includes a first SRI/TPMI field and a second SRI/TPMI field;
in a case where a value of the first indication field is a first code point, the first code point indicates to the terminal that the SRS resource set associated in the case where the uplink data channel scheduling is the uplink transmission from the single antenna panel to the single TRP is an x^{th} SRS resource set, and an SRI/TPMI field used is the first SRI/TPMI field; or
in a case where a value of the first indication field is a first code point, the first code point indicates to the terminal that the SRS resource set associated in the case where the uplink data channel scheduling is the uplink transmission from the single antenna panel to the single TRP is an x^{th} SRS resource subset, and an SRI/TPMI field used is the first SRI/TPMI field. It may be understood as that in a case of uplink transmission corresponding to the codebook, the SRI/TPMI field used is the first SRI/TPMI field; and in a case of uplink transmission corresponding to the non-codebook, the SRI field used is the first SRI field. The first SRI/TPMI field fixedly associates an SRS resource set including the largest number of SRS resources in all SRS resource sets as a first SRS resource set, the number of bits corresponding to the first SRI field is greater than or equal to the number of bits of the second SRI field, and x is 1 or 2. For example, in a case where the first code point is 00, x is 1; and in a case where the first code point is 01, x is 2.

In a possible design of embodiments of the present invention, the DCI includes a first SRI/TPMI field and a second SRI/TPMI field;
in a case where a value of the first indication field is a second code point, the second code point indicates to the terminal that an SRS resource set to be used in the case where the uplink data channel scheduling is the uplink transmission from the single antenna panel to the single TRP is a second SRS resource set, and an SRI/TPMI field used is the second SRI/TPMI field; or
in a case where a value of the first indication field is a second code point, the second code point indicates to the terminal that an SRS resource set to be used in the case where the uplink data channel scheduling is the uplink transmission from the single antenna panel to the single TRP is a second SRS resource subset, and an SRI/TPMI field used is the second SRI/TPMI field. It may be understood as that in a case of uplink transmission corresponding to the codebook, the SRI/TPMI field used is the second SRI/TPMI field; and in a case of uplink transmission corresponding to the non-codebook, the SRI field used is the second SRI field.

In a possible design of embodiments of the present invention, the second code point is 01.

In a possible design of embodiments of the present invention, the SRS resource set includes: the first SRS resource set and the second SRS resource set;
the first SRS resource set corresponds to a first TRP, or the first SRS resource set corresponds to a first antenna panel; and
the second SRS resource set corresponds to a second TRP, or the second SRS resource set corresponds to a second antenna panel.

In a possible design of embodiments of the present invention, one SRS resource set exists, and the SRS resource set includes: a first SRS resource subset and a second SRS resource subset;
the first SRS resource subset corresponds to a first TRP, or the first SRS resource subset corresponds to a first antenna panel; and
the second SRS resource subset corresponds to a second TRP, or the second SRS resource subset corresponds to a second antenna panel.

In a possible design of embodiments of the present invention, the first indication field is an SRS resource set indication field.

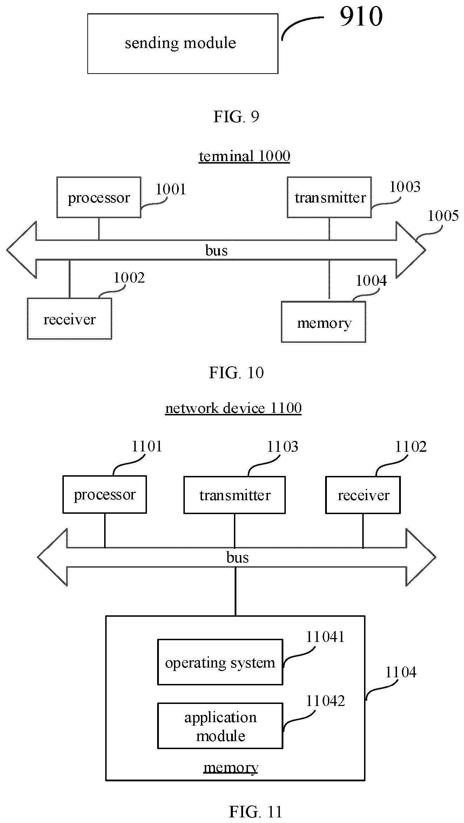

FIG. 9 is a block diagram illustrating an apparatus for indicating information according to an example embodiment of the present invention. The apparatus includes:
a sending module 910 configured to send DCI carrying a first indication field, where a part of code points in the first indication field indicates an SRS resource set and an SRI/TPMI field associated in a case where uplink data channel scheduling of the terminal is uplink transmission from a single antenna panel to a single TRP under an STxMP configuration scheduled by a single DCI.

In a possible design of embodiments of the present invention, the first code point is 00 or 01.

In a possible design of embodiments of the present invention, the DCI includes a first SRI/TPMI field and a second SRI/TPMI field;
in a case where a value of the first indication field is a first code point, the first code point indicates to the terminal that the SRS resource set associated in the case where the uplink data channel scheduling is the uplink transmission from the single antenna panel to the single TRP is an x^{th} SRS resource set, and an SRI/TPMI field used is the first SRI/TPMI field; or
in a case where a value of the first indication field is a first code point, the first code point indicates to the terminal that the SRS resource set associated in the case where the uplink data channel scheduling is the uplink transmission from the single antenna panel to the single TRP is an x^{th} SRS resource subset, and an SRI/TPMI field used is the first SRI/TPMI field. It may be understood as that in a case of uplink transmission corresponding to the codebook, the SRI/TPMI field used is the first SRI/TPMI field; and in a case of uplink transmission corresponding to the non-codebook, the SRI field used is the first SRI field. The first SRI/TPMI field fixedly associates an SRS resource set including the largest number of SRS resources in all SRS resource sets as a first SRS resource set, the number of bits corresponding to the first SRI field is greater than or equal to the number of bits of the second SRI field, and x is 1 or 2. For example, in a case where the first code point is 00, x is 1; and in a case where the first code point is 01, x is 2.

In a possible design of embodiments of the present invention, the DCI includes a first SRI/TPMI field and a second SRI/TPMI field;
in a case where a value of the first indication field is a second code point, the second code point indicates to the terminal that an SRS resource set to be used in the case where the uplink data channel scheduling is the uplink transmission from the single antenna panel to the single TRP is a second SRS resource set, and an SRI/TPMI field used is the second SRI/TPMI field; or
in a case where a value of the first indication field is a second code point, the second code point indicates to the terminal that an SRS resource set to be used in the case where the uplink data channel scheduling is the uplink transmission from the single antenna panel to the single TRP is a second SRS resource subset, and an SRI/TPMI field used is the second SRI/TPMI field. It may be understood as that in a case of uplink transmission corresponding to the codebook, the SRI/TPMI field used is the second SRI/TPMI field; and in a case of uplink transmission corresponding to the non-codebook, the SRI field used is the second SRI field.

In a possible design of embodiments of the present invention, the second code point is 01.

In a possible design of embodiments of the present invention, the SRS resource set includes: the first SRS resource set and the second SRS resource set;
the first SRS resource set corresponds to a first TRP, or the first SRS resource set corresponds to a first antenna panel; and
the second SRS resource set corresponds to a second TRP, or the second SRS resource set corresponds to a second antenna panel.

In a possible design of embodiments of the present invention, one SRS resource set exists, and the SRS resource set includes: a first SRS resource subset and a second SRS resource subset;
the first SRS resource subset corresponds to a first TRP, or the first SRS resource subset corresponds to a first antenna panel; and
the second SRS resource subset corresponds to a second TRP, or the second SRS resource subset corresponds to a second antenna panel.

In a possible design of embodiments of the present invention, the first indication field is an SRS resource set indication field.

FIG. 10 is a schematic diagram illustrating a terminal 1000 according to an example embodiment of the present invention. The terminal includes: a processor 1001, a receiver 1002, a transmitter 1003, a memory 1004 and a bus 1005.

The processor 1001 includes one or more processing cores. The processor 1001 is configured to execute various functional applications and information processing by running software programs and modules.

The receiver 1002 and the transmitter 1003 may be implemented as a communication component, which may be a communication chip.

The memory 1004 is connected to the processor 1001 via the bus 1005.

The memory 1004 may be configured to store at least one instruction, and the processor 1001 may be configured to execute the at least one instruction to implement various steps in the above method embodiments.

Moreover, the memory 1004 may be implemented using any type of volatile or non-volatile memory devices, or a combination thereof. The volatile or non-volatile memory devices include but are not limited to: a magnetic or optical disk, an electrically erasable programmable read-only memory (EEPROM), an erasable programmable read-only memory (EPROM), a static random-access memory (SRAM), a read-only memory (ROM), a magnetic memory, a flash memory and a programmable read-only memory (PROM).

In example embodiments, there is also provided a non-transitory computer readable storage medium including instructions, such as included in the memory, executable by the processor of the terminal, for performing the above method for configuring an SRS resource. For example, the non-transitory computer-readable storage medium may be a ROM, a random-access memory (RAM), a compact disc read only memory (CD-ROM), a magnetic tape, a floppy disc, an optical data storage device, and the like.

FIG. 11 is a block diagram illustrating a network device 1100 according to an example embodiment of the present invention. The network device 1100 may be a base station.

The network device 1100 may include: a processor 1101, a receiver 1102, a transmitter 1103, and a memory 1104. The receiver 1102, the transmitter 1103, and the memory 1104 are each coupled to the processor 1101 via a bus.

The processor 1101 includes one or more processing cores, and the processor 1101 is configured to execute software programs and modules to perform the method for configuring an SRS resource according to embodiments of the present invention. The memory 1104 may be configured to store software programs as well as modules. Specifically, the memory 1104 may store an operating system 11041, and an application module 11042 required for at least one function. The receiver 1102 is configured to receive communication data transmitted by other devices, and the transmitter 1103 is configured to send the communication data to other devices.

In an example embodiment of the present invention, there is provided a computer-readable storage medium having stored therein at least one instruction, at least one program, a code set, or an instruction set, which is configured to be loaded and executed by a processor to implement the method for configuring an SRS resource according to the above method embodiments.

In an example embodiment of the present invention, there is provided a computer program product including computer instructions stored in a computer-readable storage medium, and the computer instructions, when read by a processor of a computer device from the computer-readable storage medium and executed by the processor, cause the computer device to perform the method for configuring an SRS resource according to the above method embodiments.

It should be understood that the term "a plurality of/multiple" mentioned herein refers to two or more. Other embodiments of the present invention will be apparent to those skilled in the art from consideration of the specification and practice of the present invention disclosed here. The present invention is intended to cover any variations, uses, or adaptations of the present invention following the general principles thereof and including such departures from the present invention as come within known or customary practice in the art. It is intended that the specification and examples be considered as illustrative only, with a true scope and spirit of the present invention being indicated by the following claims.

It will be appreciated that the present invention is not limited to the exact construction that has been described above and illustrated in the accompanying drawings, and that various modifications and changes can be made without departing from the scope thereof. It is intended that the scope of the present invention only be limited by the appended claims.

## Claims

1. A method for indicating information, performed by a terminal, comprising:
receiving downlink control information (DCI) carrying a first indication field, wherein a part of code points in the first indication field indicates a sounding reference signal (SRS) resource set and an SRS resource indication/transmitted precoding matrix indicator (SRI/TPMI) field associated with a simultaneous transmission via multiple panels (STxMP) configuration scheduled by a single DCI and associated in a case where uplink data channel scheduling of the terminal is uplink transmission from a single antenna panel to a single transmission and reception point (TRP).

2. The method of claim 1, wherein the DCI comprises a first SRI/TPMI field and a second SRI/TPMI field;
in a case where a value of the first indication field is a first code point, the first code point indicates to the terminal that the SRS resource set associated in the case where the uplink data channel scheduling is the uplink transmission from the single antenna panel to the single TRP is an x^{th} SRS resource set, and an SRI/TPMI field used is the first SRI/TPMI field; or
in a case where a value of the first indication field is a first code point, the first code point indicates to the terminal that the SRS resource set associated in the case where the uplink data channel scheduling is the uplink transmission from the single antenna panel to the single TRP is an x^{th} SRS resource subset, and an SRI/TPMI field used is the first SRI/TPMI field;
wherein the first SRI/TPMI field fixedly associates an SRS resource set comprising a largest number of SRS resources in all SRS resource sets as a first SRS resource set, a number of bits corresponding to the first SRI field is greater than or equal to a number of bits of the second SRI field, and x is 1 or 2.

3. The method of claim 2, wherein the first code point is 00 or 01.

4. The method of claim 1, wherein the DCI comprises a first SRI/TPMI field and a second SRI/TPMI field;
in a case where a value of the first indication field is a second code point, the second code point indicates to the terminal that an SRS resource set to be used in the case where the uplink data channel scheduling is the uplink transmission from the single antenna panel to the single TRP is a second SRS resource set, and an SRI/TPMI field used is the second SRI/TPMI field; or
in a case where a value of the first indication field is a second code point, the second code point indicates to the terminal that an SRS resource set to be used in the case where the uplink data channel scheduling is the uplink transmission from the single antenna panel to the single TRP is a second SRS resource subset, and an SRI/TPMI field used is the second SRI/TPMI field.

5. The method of claim 4, wherein the second code point is 01.

6. The method of claim 2 or 4, wherein the SRS resource set comprises: the first SRS resource set and the second SRS resource set;
the first SRS resource set corresponds to a first TRP, or the first SRS resource set corresponds to a first antenna panel; and
the second SRS resource set corresponds to a second TRP, or the second SRS resource set corresponds to a second antenna panel.

7. The method of claim 2 or 4, wherein one SRS resource set exists, and the SRS resource set comprises: a first SRS resource subset and a second SRS resource subset;
the first SRS resource subset corresponds to a first TRP, or the first SRS resource subset corresponds to a first antenna panel; and
the second SRS resource subset corresponds to a second TRP, or the second SRS resource subset corresponds to a second antenna panel.

8. The method of claim 1, wherein the first indication field is an SRS resource set indication field.

9. A method for indicating information, performed by a network device, comprising:
sending downlink control information (DCI) carrying a first indication field, wherein a part of code points in the first indication field indicates a sounding reference signal (SRS) resource set and an SRS resource indication/transmitted precoding matrix indicator (SRI/TPMI) field associated in a case where uplink data channel scheduling of the terminal is uplink transmission from a single antenna panel to a single transmission and reception point (TRP) under a simultaneous transmission via multiple panels (STxMP) configuration scheduled by a single DCI.

10. The method of claim 9, wherein the DCI comprises a first SRI/TPMI field and a second SRI/TPMI field;
in a case where a value of the first indication field is a first code point, the first code point indicates to the terminal that the SRS resource set associated in the case where the uplink data channel scheduling is the uplink transmission from the single antenna panel to the single TRP is an x^{th} SRS resource set, and an SRI/TPMI field used is the first SRI/TPMI field; or
in a case where a value of the first indication field is a first code point, the first code point indicates to the terminal that the SRS resource set associated in the case where the uplink data channel scheduling is the uplink transmission from the single antenna panel to the single TRP is an x^{th} SRS resource subset, and an SRI/TPMI field used is the first SRI/TPMI field;
wherein the first SRI/TPMI field fixedly associates an SRS resource set comprising a largest number of SRS resources in all SRS resource sets as a first SRS resource set, a number of bits corresponding to the first SRI field is greater than or equal to a number of bits of the second SRI field, and x is 1 or 2.

11. The method of claim 10, wherein the first code point is 00 or 01.

12. The method of claim 9, wherein the DCI comprises a first SRI/TPMI field and a second SRI/TPMI field;
in a case where a value of the first indication field is a second code point, the second code point indicates to the terminal that an SRS resource set to be used in the case where the uplink data channel scheduling is the uplink transmission from the single antenna panel to the single TRP is a second SRS resource set, and an SRI/TPMI field used is the second SRI/TPMI field; or
in a case where a value of the first indication field is a second code point, the second code point indicates to the terminal that an SRS resource set to be used in the case where the uplink data channel scheduling is the uplink transmission from the single antenna panel to the single TRP is a second SRS resource subset, and an SRI/TPMI field used is the second SRI/TPMI field.

13. The method of claim 12, wherein the second code point is 01.

14. The method of claim 10 or 12, wherein the SRS resource set comprises: the first SRS resource set and the second SRS resource set;
the first SRS resource set corresponds to a first TRP, or the first SRS resource set corresponds to a first antenna panel; and
the second SRS resource set corresponds to a second TRP, or the second SRS resource set corresponds to a second antenna panel.

15. The method of claim 10 or 12, wherein one SRS resource set exists, and the SRS resource set comprises: a first SRS resource subset and a second SRS resource subset;
the first SRS resource subset corresponds to a first TRP, or the first SRS resource subset corresponds to a first antenna panel; and
the second SRS resource subset corresponds to a second TRP, or the second SRS resource subset corresponds to a second antenna panel.

16. The method of any one of claims 9 to 13, wherein the first indication field is an SRS resource set indication field.

17. An apparatus for indicating information, comprising:
a receiving module configured to receive downlink control information (DCI) carrying a first indication field, wherein a part of code points in the first indication field indicates a sounding reference signal (SRS) resource set and an SRS resource indication/transmitted precoding matrix indicator (SRI/TPMI) field associated in a case where uplink data channel scheduling of the terminal is uplink transmission from a single antenna panel to a single transmission and reception point (TRP) under a simultaneous transmission via multiple panels (STxMP) configuration scheduled by a single DCI.

18. An apparatus for indicating information, comprising:
a sending module configured to send downlink control information (DCI) carrying a first indication field, wherein a part of code points in the first indication field indicates a sounding reference signal (SRS) resource set and an SRS resource indication/transmitted precoding matrix indicator (SRI/TPMI) field associated in a case where uplink data channel scheduling of the terminal is uplink transmission from a single antenna panel to a single transmission and reception point (TRP) under a simultaneous transmission via multiple panels (STxMP) configuration scheduled by a single DCI.

19. A terminal, comprising:
a processor; and
a transceiver coupled to the processor;
wherein the processor is configured to load and execute executable instructions to implement the method for indicating information of any one of claims 1 to 8.

20. A network device, comprising:
a processor; and
a transceiver coupled to the processor;
wherein the processor is configured to load and execute executable instructions to implement the method for indicating information of any one of claims 9 to 16.

21. A chip, comprising a programmable logic circuit and/or program instructions, and configured to implement the method for indicating information of any one of claims 1 to 8 or the method for indicating information of any one of claims 9 to 16 when it runs.

22. A computer-readable storage medium having stored therein at least one instruction, at least one program, a code set, or an instruction set, which is configured to be loaded and executed by a processor to implement the method for indicating information of any one of claims 1 to 8 or the method for indicating information of any one of claims 9 to 16.

23. A computer program product comprising computer instructions stored in a computer-readable storage medium, wherein the computer instructions, when read by a processor of a computer device from the computer-readable storage medium and executed by the processor, cause the computer device to perform the method for indicating information of any one of claims 1 to 8 or the method for indicating information of any one of claims 9 to 16.
